# EUROPÄISCHE PATENTSCHRIFT

(11) **EP 3 327 989 B1**
(45) Veröffentlichungstag und Bekanntmachung des Hinweises auf die Patenterteilung: **27.01.2021**
(21) Anmeldenummer: 16200639.9
(22) Anmeldetag: 25.11.2016
(51) Int. Cl.: H04L 12/18, H04L 12/58

(54) **VERFAHREN ZUR HERSTELLUNG EINER ZEITLICH NACHFOLGENDEN SPRACHVERBINDUNG EINES NUTZERS EINER CALLCENTEREINRICHTUNG MIT DER CALLCENTEREINRICHTUNG, NACHDEM EINE ZEITLICH VORHERGEHENDE SPRACHVERBINDUNG DES NUTZERS MIT DER CALLCENTEREINRICHTUNG HERGESTELLT WURDE UND BEENDET IST, CALLCENTEREINRICHTUNG, COMPUTERPROGRAMM UND COMPUTERPROGRAMMPRODUKT**
METHOD FOR PRODUCING A SUBSEQUENT VOICE LINK OF A USER OF A CALL CENTRE FACILITY WITH THE CALL CENTRE FACILITY AFTER A VOICE LINK HAS BEEN MADE WITH THE CALL CENTRE FACILITY AND TERMINATED, CALL CENTRE FACILITY, COMPUTER PROGRAM AND COMPUTER PROGRAM PRODUCT
PROCÉDÉ D'ÉTABLISSEMENT D'UNE COMMUNICATION VOCALE CONSÉCUTIVE DANS LE TEMPS D'UN UTILISATEUR D'UN DISPOSITIF DE CENTRE D'APPELS AVEC LE DISPOSITIF DE CENTRE D'APPELS, APRÈS L'ÉTABLISSEMENT ET LA FIN D'UNE COMMUNICATION VOCALE PRÉCÉDENTE ENTRE L'UTILISATEUR ET LE DISPOSITIF DE CENTRE D'APPELS, DISPOSITIF DE CENTRE D'APPELS, PROGRAMME INFORMATIQUE ET PRODUIT-PROGRAMME INFORMATIQUE

(43) Veröffentlichungstag der Anmeldung: 30.05.2018
(73) Patentinhaber: Deutsche Telekom AG, 53113 Bonn (DE)
(72) Erfinder: Niemeyer, Gero, 50973 Köln (DE); Weisenburger, Franz, 53604 Bad Honnef (DE); Jehnert, Henriette, 53113 Bonn (DE); Kaufmann, Bert, 48151 Münster (DE)
(74) Vertreter: Schwöbel, Thilo K.

(56) Entgegenhaltungen:
- EP-A2- 0 768 788
- US-A1- 2015 078 547

## Beschreibung

### Stand der Technik

Die Erfindung betrifft ein Verfahren zur Herstellung einer zeitlich nachfolgenden Sprachverbindung eines Nutzers einer Callcentereinrichtung mit der Callcentereinrichtung, nachdem eine zeitlich vorhergehende Sprachverbindung des Nutzers mit der Callcentereinrichtung hergestellt wurde und beendet ist, wobei die zeitlich nachfolgende Sprachverbindung auf die zeitlich vorhergehende Sprachverbindung Bezug nimmt.

Die Erfindung betrifft ferner auch ein Callcentereinrichtung zur Herstellung einer zeitlich nachfolgenden Sprachverbindung eines Nutzers der Callcentereinrichtung mit der Callcentereinrichtung, nachdem eine zeitlich vorhergehende Sprachverbindung des Nutzers mit der Callcentereinrichtung hergestellt wurde und beendet ist, wobei die Callcentereinrichtung derart konfiguriert ist, dass die zeitlich nachfolgende Sprachverbindung auf die zeitlich vorhergehende Sprachverbindung Bezug nimmt.

Weiterhin betrifft die Erfindung auch ein Computerprogramm mit Programmcodemitteln und ein Computerprogrammprodukt mit einem computerlesbaren Medium und einem auf dem computerlesbaren Medium gespeicherten Computerprogramm mit Programmcodemitteln zur Herstellung einer zeitlich nachfolgenden Sprachverbindung eines Nutzers einer Callcentereinrichtung mit der Callcentereinrichtung, nachdem eine zeitlich vorhergehende Sprachverbindung des Nutzers mit der Callcentereinrichtung hergestellt wurde, wobei die Programmcodemittel dazu geeignet sind, dass alle Schritte des erfindungsgemäßen Verfahrens durchführbar sind.

Verfahren zur Bereitstellung von Kundensupport unter Benutzung einer Callcentereinrichtung sind in vielen Geschäftsbereichen durch unterschiedliche Dienstleister, Einzelhandelskonzerne etc. üblich.

Typischerweise bietet der Dienstleister dabei eine Telekommunikationsrufnummer an, unter der ein Kunde einen Mitarbeiter des Dienstleisters erreichen kann. Fragen bezüglich einer bestimmten Dienstleistung, eines Produkts, einer Bereitstellung eines Produkts oder Ähnlichem können dann durch den Mitarbeiter der Callcentereinrichtung entgegengenommen werden. Im Folgenden können dann Informationen bezüglich einer Dienstleistung, Informationen bezüglich einer Frage nach einem Produkt oder eine Hilfestellung bezüglich eines technischen Problems an den anrufenden Kunden weitergegeben werden. In diesem Zusammenhang erfüllen Callcentereinrichtungen einen essentiellen Teil der Kundenberatung in einer Vielzahl von Dienstleistungssektoren und im Einzelhandel.

Der wirtschaftliche Erfolg eines Dienstleisters ist somit eng gekoppelt an die fachliche/technische Qualität der Beratung durch die Mitarbeiter einer dem Dienstleister zugeordneten Callcentereinrichtung und ebenso an die durch den Kunden empfundene Qualität des Services, bei der neben der fachlichen Qualität auch soziale Komponenten eine Rolle spielen können.

Nachteilig bei solchen im Stand der Technik offenbarten Verfahren ist unter anderem, dass der Kunde, sollten weitere Anrufe bei der Callcentereinrichtung bezüglich seines Anliegens nötig oder gewünscht sein, mit einem zufälligen Mitarbeiter der Callcentereinrichtung verbunden wird. Dadurch kann in vielen Fällen keine optimale technische Beratung stattfinden und ein persönliches Verhältnis zwischen dem Mitarbeiter der Callcentereinrichtung und dem Kunden aufgebaut werden, was den Beratungskomfort des Kunden vermindern kann.

Des Weiteren sind im Stand der Technik Verfahren offenbart, bei dem ein Nutzer einer Callcentereinrichtung, bei einem zweiten Anruf durch eine Informationsübertragung an den gleichen Mitarbeiter des Callcenters weitergeleitet wird, der auch einen vorangegangenen Anruf des Nutzers entgegengenommen hat. Allerdings weisen solche im Stand der Technik offenbarten Verfahren diverse Nachteile auf. Unter anderem ist eine direkte Weiterleitung beim zweiten Anruf des Nutzers zu einem speziellen Mitarbeiter nur dann möglich, wenn der Mitarbeiter zu diesem Zeitpunkt auch zur Verfügung steht. Dies kann insbesondere dann nicht der Fall sein, wenn besagter Mitarbeiter während des Eingangs des zweiten Anrufs, einen anderen Kunden berät, gerade nicht arbeitet, oder anderweitig verhindert ist.

Die Anmeldung US2015078547 beschreibt eine Callcentereinrichtung bei der die Möglichkeit vorgesehen ist, eine Verbindung zu einem Agenten herzustellen, der zuvor schon mit dem Kunden interagiert hat. Einem Kunden kann eine Liste zukünftiger Zeiten, zu denen der Ursprungsagent verfügbar ist, zur Auswahl gegeben werden, damit zeitlich passend zurückgerufen werden kann. Die Kommunikation erfolgt über Sprache oder alternativ über ein Webinterface, in letzterem Fall kann ein Pop-up-Bildschirm auf die Möglichkeit der Verbindung zum ursprünglichen Agenten hinweisen.

### Offenbarung der Erfindung

Der Erfindung liegt die Aufgabe zugrunde, ein Verfahren zur verbesserten fachlichen Beratung eines Nutzers durch eine Callcentereinrichtung zur Verfügung zu stellen und/oder den von einem Nutzer bei der Kommunikation mit einer Callcentereinrichtung empfunden Beratungskomfort zu erhöhen.

Diese Aufgabe wird erfindungsgemäß gelöst durch ein Verfahren gemäß dem Anspruch 1.

Erfindungsgemäß ist es hierdurch in vorteilhafter Weise möglich, dass ein Nutzer einer Callcentereinrichtung (also beispielsweise ein Kunde eines Dienstleisters), nachdem bereits eine zeitlich vorhergehende Sprachverbindung mit einer Callcentereinrichtung (bzw., mit einem Mitarbeiter einer solchen Callcentereinrichtung) hergestellt wurde (und somit in einer Ausführungsvariante der Erfindung bereits ein zeitlich vorhergehendes Beratungsgespräch stattgefunden hat), auf die Möglichkeit zur Herstellung einer zeitlich nachfolgenden Sprachverbindung mit der Callcentereinrichtung hingewiesen wird. Dies ist beispielsweise dann vorteilhaft, wenn während der Dauer der zeitlich vorhergehenden Sprachverbindung nicht alle Fragen oder Probleme des Nutzers der Callcentereinrichtung beantwortet oder gelöst werden konnten, oder wenn sich neue Fragen oder Probleme (bezüglich eines verwandten Themas) seitens des Nutzers nach der zeitlich vorhergehenden Sprachverbindung ergeben.

Des Weiteren ist es hierdurch in vorteilhafter Weise möglich, dass, falls während der zeitlich vorhergehenden Sprachverbindung zwischen dem Nutzer und der Callcentereinrichtung eine weitere Vorgehensweise bezüglich eines Problems vereinbart wurde, die Handlungen der Callcentereinrichtung oder eines der Callcentereinrichtung zugeordneten Dienstleisters erfordert, der Nutzer somit auf die Möglichkeit zur Herstellung einer zeitlich nachfolgenden Sprachverbindung mit der Callcentereinrichtung hingewiesen wird. Dadurch ergibt sich für den Nutzer die Möglichkeit, weitere/ neue Fragen oder Probleme (die sich aus den Handlungen des Callcenters oder des Dienstleisters ergeben haben) mit der Callcentereinrichtung zu besprechen, bzw. zu diesen Beratung zu erhalten. In einer Ausführungsform der Erfindung wird dem Nutzer diese Möglichkeit der Herstellung einer zeitlich nachfolgenden Sprachverbindung durch eine textorientierte Nachricht mitgeteilt. Dies ist insbesondere dann hilfreich, wenn die zeitlich vorhergehende Sprachverbindung mittels eines Mobilfunkgerätes (bzw. eines Gerätes, das die Darstellung einer textorientierten Nachricht unterstützt, wie z.B., ein Mobiltelefon, ein Tablet etc.) durch den Nutzer angestoßen wurde.

Gemäß einer Ausführungsform des erfindungsgemäßen Verfahrens ist es vorgehsehen, dass der Callcentereinrichtung eine Mehrzahl von Sprachverbindungen durchführenden Personen zugeordnet sind und sich die Bezugnahme der zeitlich nachfolgenden Sprachverbindung auf die zeitlich vorhergehende Sprachverbindung auf die die Sprachverbindungen durchführenden Personen der Callcentereinrichtung bezieht,
-- wobei entweder eine bestimmte Person der Mehrzahl von Sprachverbindungen durchführenden Personen sowohl die zeitlich vorhergehende Sprachverbindung mit dem Nutzer als auch die zeitlich nachfolgende Sprachverbindung mit dem Nutzer durchführt
-- oder wobei die bestimmte Person der Mehrzahl von Sprachverbindungen durchführenden Personen die zeitlich vorhergehende Sprachverbindung mit dem Nutzer durchführt und - im Falle einer Nichterreichbarkeit der bestimmten Person - eine weitere Person die zeitlich nachfolgende Sprachverbindung mit dem Nutzer durchführt, wobei die weitere Person eine Vertretung der bestimmten Person ist.

Erfindungsgemäß ist es hierdurch in vorteilhafter Weise möglich, dass der Callcentereinrichtung eine Mehrzahl von Sprachverbindungen durchführenden Personen zugeordnet sind. Gemäß einer Ausführungsform der vorliegenden Erfindung wird dabei die zeitlich nachfolgende Sprachverbindung von der gleichen bestimmten Person aus der Mehrzahl der Sprachverbindungen durchführenden Personen (bzw. dem gleichen Mitarbeiter der Callcentereinrichtung) durchgeführt, wie die zeitlich vorhergehende Sprachverbindung. Hierdurch wird erfindungsgemäß in vorteilhafter Weise ermöglicht, dass der Mitarbeiter der Callcentereinrichtung, der an der zeitlich nachfolgenden Sprachverbindung beteiligt ist, dem Nutzer der Callcentereinrichtung bereits bekannt ist. Dies kann vorteilhaft für das Vertrauensverhältnis zwischen Nutzer und Mitarbeiter der Callcentereinrichtung sein und somit den Komfort des Verfahrens für den Nutzer erhöhen. Des Weiteren ist der Mitarbeiter der Callcentereinrichtung bereits mit dem fachlichen Problem des Nutzers vertraut, was die fachliche Beratung vereinfacht und vorteilhaft für die Geschwindigkeit und die Qualität der Beratung sein kann.

Erfindungsgemäß ist es dabei des Weiteren vorteilhaft möglich, dass die zeitlich nachfolgende Sprachverbindung durch eine weitere Person der Mehrzahl von Sprachverbindungen durchführenden Personen durchgeführt wird, wobei diese weitere Person nicht die Person ist, die die zeitlich vorhergehende Sprachverbindung durchgeführt hat, sondern eine Person, die die Person, die die zeitlich vorhergehende Sprachverbindung durchgeführt hat, vertritt. Dies kann insbesondere dann sehr vorteilhaft sein, wenn die Person, die die zeitlich vorhergehende Sprachverbindung durchgeführt hat, nicht erreichbar ist (beispielsweise Urlaub hat, einer anderen Beschäftigung nachgeht, die sie unabkömmlich macht etc.).

Gemäß dem erfindungsgemäßen Verfahren ist es vorgehsehen, dass in einem auf den dritten Schritt nachfolgenden und dem vierten Schritt vorangehenden fünften Schritt die Herstellung der zeitlich nachfolgenden Sprachverbindung ausgelöst oder zumindest angefragt wird, wobei die Herstellung der zeitlich nachfolgenden Sprachverbindung auf folgende Art erfolgt:
-- im fünften Schritt wird eine Sprachverbindung des Nutzers zur Callcentereinrichtung aufgebaut und beendet und im nachfolgenden vierten Schritt wird die zeitlich nachfolgende Sprachverbindung durch einen Rückruf der Callcentereinrichtung zu dem Nutzer hergestellt.

Das erfindungsgemäße Verfahren ermöglicht es gemäß einer solchen Ausführungsform der Erfindung mit einem fünften Schritt, der dem dritten Schritt nachfolgt und dem vierten Schritt vorangestellt ist, in vorteilhafter Weise, dass die Herstellung der zeitlich nachfolgenden Verbindung ausgelöst oder zumindest angefragt wird. Diese Ausführungsform des erfindungsgemäßen Verfahrens erleichtert die Herstellung der zeitlich nachfolgenden Sprachverbindung und kann vorteilhaft für das Komfortempfinden des Nutzers sein.

Des Weiteren wird gemäß der Erfindung in einem fünften Schritt eine Sprachverbindung des Nutzers mit der Callcentereinrichtung aufgebaut und beendet und im nachfolgenden vierten Schritt dann die zeitlich nachfolgende Sprachverbindung durch einen Anruf der Callcentereinrichtung bei dem Nutzer hergestellt. Dies ermöglicht erfindungsgemäß, dass eine der Callcentereinrichtung zugeordnete bestimmte Person (ein Mitarbeiter des Callcenters), die bereits an der zeitlich vorhergehenden Sprachverbindung beteiligt war, den Nutzer zurückrufen kann, falls diese bestimmte Person beispielsweise bei/oder in einem Zeitintervall nach der Sprachverbindungsherstellung während eines fünften Schritts nicht unmittelbar erreichbar ist.

Gemäß dem erfindungsgemäßen Verfahren ist es vorgehsehen, dass im fünften Schritt eine Zeitvorgabe des Nutzers für die Herstellung der zeitlich nachfolgenden Sprachverbindung an die Callcentereinrichtung übertragen wird, wobei die Zeitvorgabe eine Information umfasst, dass der Nutzer für die Herstellung der zeitlich nachfolgenden Sprachverbindung in einem oder mehreren zukünftigen Zeitfenstern ansprechbar ist.

In vorteilhafter Weise wird somit während eines fünften Schritts durch den Nutzer eine seinerseits präferierte Zeitvorgabe angegeben, wann die Herstellung der zeitlich nachfolgenden Sprachverbindung stattfinden kann oder soll. Die Zeitpräferenz des Nutzers steht der Callcentereinrichtung bzw. einer der Callcentereinrichtung zugeordneten Person (beispielsweise einem Mitarbeiter der Callcentereinrichtung) somit nach einem fünften Schritt zur Verfügung und die zeitlich nachfolgende Sprachverbindung kann vorteilhaft in einem durch den Nutzer präferierten Zeitraum stattfinden.

Gemäß einer Ausführungsform der Erfindung hat der Nutzer im fünften Schritt die Möglichkeit der Callcentereinrichtung mitzuteilen, ob er in einem zeitlich nachfolgenden Gespräch mit der bestimmten Person, die an der Durchführung des zeitlich vorhergehenden Gespräch beteiligt war, verbunden werden möchte. Es wird beispielsweise eine textorientierte Information oder eine Audioinformation durch den Nutzer an die Callcentereinrichtung übermittelt, die anzeigt, ob der Nutzer in einem zeitlich nachfolgenden Gespräch mit der bestimmten Person, die an der Durchführung des zeitlich vorhergehenden Gespräch beteiligt war, verbunden werden möchte.

Gemäß einer Ausführungsform des erfindungsgemäßen Verfahrens ist es vorgehsehen, dass im fünften Schritt ein Zeitvorschlag der Callcentereinrichtung für die Herstellung der zeitlich nachfolgenden Sprachverbindung an den Nutzer übertragen wird, wobei der Zeitvorschlag wenigstens eine der nachfolgenden Informationen umfasst:
-- eine Information hinsichtlich der Verfügbarkeit der bestimmten Person,
-- eine Information, dass die bestimmte Person für die Herstellung der zeitlich nachfolgenden Sprachverbindung in einem oder mehreren weiteren zukünftigen Zeitfenstern ansprechbar ist,
-- eine Information, dass die weitere Person für die Herstellung der zeitlich nachfolgenden Sprachverbindung in einem oder mehreren weiteren zukünftigen Zeitfenstern ansprechbar ist.

Hierdurch wird dem Nutzer gemäß einer Ausführungsform der Erfindung in vorteilhafter Weise während eines fünften Schritts mitgeteilt, in welchem Zeitraum (oder in welchen Zeiträumen) die Person, die die zeitlich vorhergehende Sprachverbindung mit dem Nutzer durchgeführt hat (oder die an dieser zeitlich vorhergehenden Sprachverbindung beteiligt war), für eine zeitlich nachfolgende Sprachverbindung zur Verfügung steht. Dies erleichtert die zeitliche Planung der zeitlich nachfolgenden Sprachverbindung und führt zu einem erhöhten Komfort für den Nutzer der Callcentereinrichtung.

Gemäß einer Ausführungsform des erfindungsgemäßen Verfahrens ist es vorgehsehen, dass die im dritten Schritt an den Nutzer übertragene textorientierte Nachricht wenigstens einer der nachfolgenden Nachrichten entspricht:
-- eine SMS-Nachricht (short message service-Nachricht),
-- eine MME-Nachricht (multimedia message-Nachricht),
-- eine E-Mail-Nachricht,
-- eine im Rahmen eines sozialen Netzwerks übertragene Nachricht
-- eine über einen Messaging-Dienst übertragene Nachricht.

Hierdurch ist es erfindungsgemäß möglich, dass die während eines dritten Schritts übertragenen textorientierten Nachrichten (in einem dritten Schritt an den Nutzer) jeweils entweder einer SMS-Nachricht, MME-Nachricht, E-Mail-Nachricht, einer im Rahmen eines sozialen Netzwerks übertragenen Nachricht (beispielswiese mittels eine Applikation auf einem Mobiltelefon, einem Tablet etc.), und/oder einer über einen Messaging-Dienst übertragene Nachricht entspricht. Somit stehen dem Nutzer und der Callcentereinrichtung erfindungsgemäß eine Vielzahl an Ausprägungen von textbasierten Nachrichten zur gegenseitigen Kommunikation zur Verfügung. Dies bietet erhebliche technische Vorteile, da verschiedenste Präferenzen des Nutzers aufgegriffen werden können, bzw. eine für das vom Nutzer benutze Kommunikationsgerät geeignete textbasierte Nachrichtenform gewählt werden kann.

Gemäß einer Ausführungsform des erfindungsgemäßen Verfahrens ist es vorgehsehen, dass im fünften Schritt eine für die Herstellung der zeitlich nachfolgenden Sprachverbindung zu benutzende Rufnummer oder Identifikationsinformation des Nutzer zur Callcentereinrichtung übertragen wird.

Hierdurch ist es erfindungsgemäß möglich, dass die Callcentereinrichtung während eines fünften Schritts eine Information bezüglich der für die zeitlich nachfolgende Sprachverbindung vorzugsweise zu benutzende Rufnummer erhält. Alternativ wird dabei auch eine andere Identifikationsinformation übermittelt (beispielsweise eine Namensinformation, eine Identifikationsnummer, die den Nutzer für die Callcentereinrichtung identifizierbar macht, oder eine Identifikationsnummer, die das zeitlich vorhergehende Gespräch betrifft und anhand derer der Nutzer durch die Callcentereinrichtung identifiziert werden kann). Hierdurch ist es in vorteilhafter Weise möglich, dass der Callcentereinrichtung während des fünften Schritts eine Rufnummer oder eine Information zur Verfügung gestellt wird, anhand derer das Callcenter eine geeignete (oder durch den Nutzer gewünschte) Rufnummer ermitteln kann, die dann für die zeitlich nachfolgenden Sprachverbindung verwendet wird.

Gemäß einer Ausführungsform des erfindungsgemäßen Verfahrens ist es vorgehsehen, dass die Herstellung der zeitlich nachfolgenden Sprachverbindung im vierten Schritt lediglich dann erfolgt, wenn der fünfte Schritt innerhalb eines vorgegebenen Zeitintervalls nach der zeitlich vorhergehenden Sprachverbindung erfolgt.

Hierdurch wird in vorteilhafter Weise ein Zeitintervall festgelegt, innerhalb dessen der fünfte Schritt nach der zeitlich vorhergehenden Sprachverbindung angestoßen oder durchgeführt werden muss. Beispielsweise kann so gemäß einer Ausführungsform der Erfindung sichergestellt werden, dass ein Nutzer mit dem gleichen Mitarbeiter der Callcentereinrichtung, der die zeitlich vorhergehende Sprachverbindung durchgeführt hat (oder an dieser beteiligt war) nur während eines bestimmten Zeitraums nach der zeitlich vorhergehenden Sprachverbindung wieder verbunden wird. So kann beispielsweise sichergestellt werden, dass nicht nach einem unverhältnismäßig langen Zeitraum (, sodass im Normalfall bei einer Erneuten Nutzung der Callcentereinrichtung durch den Nutzer kein/ein schwacher Bezug zur vorherigen Nutzung mehr besteht, bzw. sodass sich der Nutzer in vielen Fällen nicht mehr detailliert an die vorhergehende Sprachverbindung erinnern würde) wieder eine Verbindung mit dem gleichen Mitarbeiter der Callcentereinrichtung hergestellt wird.

Darüber hinaus ist es gemäß einer weiteren Ausführungsform der Erfindung vorgesehen, dass der Nutzer durch das Callcenter auf die Möglichkeit zur Herstellung der auf die zeitlich vorhergehende Sprachverbindung Bezug nehmende zeitlich nachfolgende Sprachverbindung während des zweiten Schritts hingewiesen wird.

Diese Aufgabe wird des Weiteren erfindungsgemäß gelöst durch ein Callcentereinrichtung gemäß Anspruch 7.

Hierdurch ist es erfindungsgemäß in vorteilhafter Weise möglich, dass ein Nutzer einer Callcentereinrichtung (also beispielsweise ein Kunde eines Dienstleisters) nachdem bereits eine zeitlich vorhergehende Sprachverbindung mit einer Callcentereinrichtung (bzw., mit einem Mitarbeiter einer solchen Callcentereinrichtung) hergestellt wurde (und somit in einer Ausführungsvariante der Erfindung bereits ein zeitlich vorhergehendes Beratungsgespräch stattgefunden hat), auf die Möglichkeit zur Herstellung einer zeitlich nachfolgenden Sprachverbindung mit der Callcentereinrichtung hingewiesen wird. Dies ist beispielsweise dann vorteilhaft, wenn während der Dauer der zeitlich vorhergehenden Sprachverbindung nicht alle Fragen oder Probleme des Nutzers der Callcentereinrichtung beantwortet oder gelöst werden konnten, oder wenn sich neue Fragen oder Probleme (bezüglich eines verwandten Themas) seitens des Nutzers nach der zeitlich vorhergehenden Sprachverbindung ergeben.

Des Weiteren ist es hierdurch in vorteilhafter Weise möglich, dass, falls während der zeitlich vorhergehenden Sprachverbindung zwischen dem Nutzer und der Callcentereinrichtung eine weitere Vorgehensweise bezüglich eines Problems vereinbart wurde, die Handlungen der Callcentereinrichtung oder eines der Callcentereinrichtung zugeordneten Dienstleisters erfordert, der Nutzer somit auf die Möglichkeit zur Herstellung einer zeitlich nachfolgenden Sprachverbindung mit der Callcentereinrichtung hingewiesen wird. Dadurch ergibt sich für den Nutzer die Möglichkeit, weitere/ neue Fragen oder Probleme (die sich aus den Handlungen des Callcenters oder des Dienstleisters ergeben haben) mit der Callcentereinrichtung zu besprechen, bzw. zu diesen Beratung zu erhalten. In einer Ausführungsform wird dem Nutzer diese Möglichkeit der Herstellung einer zeitlich nachfolgenden Sprachverbindung durch eine textorientierte Nachricht mitgeteilt. Dies ist insbesondere dann hilfreich, wenn die zeitlich vorhergehende Sprachverbindung mittels eines Mobilfunkgerätes (bzw. eines Gerätes, das die Darstellung einer textorientierten Nachricht unterstützt, wie z.B., ein Mobiltelefon, ein Tablet etc.) durch den Nutzer angestoßen wurde.

Gemäß einer Ausführungsform der erfindungsgemäßen Callcentereinrichtung ist es vorgehsehen, dass der Callcentereinrichtung eine Mehrzahl von Sprachverbindungen durchführenden Personen zugeordnet sind und sich die Bezugnahme der zeitlich nachfolgenden Sprachverbindung auf die zeitlich vorhergehende Sprachverbindung auf die die Sprachverbindungen durchführenden Personen der Callcentereinrichtung bezieht,
-- wobei entweder eine bestimmte Person der Mehrzahl von Sprachverbindungen durchführenden Personen sowohl die zeitlich vorhergehende Sprachverbindung mit dem Nutzer als auch die zeitlich nachfolgende Sprachverbindung mit dem Nutzer durchführt
-- oder wobei die bestimmte Person der Mehrzahl von Sprachverbindungen durchführenden Personen die zeitlich vorhergehende Sprachverbindung mit dem Nutzer durchführt und - im Falle einer Nichterreichbarkeit der bestimmten Person - eine weitere Person die zeitlich nachfolgende Sprachverbindung mit dem Nutzer durchführt, wobei die weitere Person eine Vertretung der bestimmten Person ist.

Erfindungsgemäß ist es hierdurch in vorteilhafter Weise möglich, dass der Callcentereinrichtung eine Mehrzahl von Sprachverbindungen durchführenden Personen zugeordnet sind. Gemäß einer Ausführungsform der vorliegenden Erfindung wird dabei die zeitlich nachfolgende Sprachverbindung von der gleichen bestimmten Person aus der Mehrzahl der Sprachverbindungen durchführenden Personen (bzw. dem gleichen Mitarbeiter der Callcentereinrichtung) durchgeführt, wie die zeitlich vorhergehende Sprachverbindung. Hierdurch wird erfindungsgemäß in vorteilhafter Weise ermöglicht, dass der Mitarbeiter der Callcentereinrichtung, der an der zeitlich nachfolgenden Sprachverbindung beteiligt ist, dem Nutzer der Callcentereinrichtung bereits bekannt ist. Dies kann vorteilhaft für das Vertrauensverhältnis zwischen Nutzer und Mitarbeiter der Callcentereinrichtung sein und somit den Komfort für den Nutzer erhöhen. Des Weiteren ist der Mitarbeiter der Callcentereinrichtung bereits mit dem fachlichen Problem des Nutzers vertraut, was die fachliche Beratung vereinfacht und vorteilhaft für die Geschwindigkeit und die Qualität der Beratung sein kann.

Erfindungsgemäß ist es dabei des Weiteren vorteilhaft möglich, dass die zeitlich nachfolgende Sprachverbindung durch eine weitere Person der Mehrzahl von Sprachverbindungen durchführenden Personen durchgeführt wird, wobei diese weitere Person nicht die Person ist, die die zeitlich vorhergehende Sprachverbindung durchgeführt hat, sondern eine Person, die die Person, die die zeitlich vorhergehende Sprachverbindung durchgeführt hat, vertritt. Dies kann insbesondere dann sehr vorteilhaft sein, wenn die Person, die die zeitlich vorhergehende Sprachverbindung durchgeführt hat, nicht erreichbar ist (beispielsweise Urlaub hat, einer anderen Beschäftigung nachgeht, die sie unabkömmlich macht etc.).

Gemäß der erfindungsgemäßen Callcentereinrichtung ist es vorgehsehen, dass die Callcentereinrichtung derart konfiguriert ist, dass die Herstellung der zeitlich nachfolgenden Sprachverbindung ausgelöst oder zumindest angefragt wird, und ferner derart konfiguriert ist, dass die Herstellung der zeitlich nachfolgenden Sprachverbindung auf die folgende Art erfolgt:
-- es wird eine Sprachverbindung des Nutzers zur Callcentereinrichtung aufgebaut und beendet und es wird die zeitlich nachfolgende Sprachverbindung durch einen Rückruf der Callcentereinrichtung zu dem Nutzer hergestellt.

Die erfindungsgemäße Callcentereinrichtung ermöglicht es gemäß einer solchen Ausführungsform der Erfindung mit einem fünften Schritt, der dem dritten Schritt nachfolgt und dem vierten Schritt vorangestellt ist, in vorteilhafter Weise, dass die Herstellung der zeitlich nachfolgenden Verbindung ausgelöst oder zumindest angefragt wird. Diese Ausführungsform der erfindungsgemäßen Callcentereinrichtung erleichtert die Herstellung der zeitlich nachfolgenden Sprachverbindung und kann vorteilhaft für das Komfortempfinden des Nutzers sein.

Des Weiteren wird gemäß der Erfindung in einem fünften Schritt eine Sprachverbindung des Nutzers mit der Callcentereinrichtung aufgebaut und beendet und im nachfolgenden vierten Schritt wird dann die zeitlich nachfolgende Sprachverbindung durch einen Anruf der Callcentereinrichtung bei dem Nutzer hergestellt. Dies ermöglicht erfindungsgemäß, dass eine der Callcentereinrichtung zugeordnete bestimmte Person (ein Mitarbeiter des Callcenters), die bereits an der zeitlich vorhergehenden Sprachverbindung beteiligt war, den Nutzer zurückrufen kann, falls diese bestimmte Person beispielsweise bei/oder in einem Zeitintervall nach der Sprachverbindungsherstellung während eines fünften Schritts nicht unmittelbar erreichbar ist.

Weiterhin ist Gegenstand der vorliegenden Erfindung ein Computerprogramm mit Programmcodemitteln, mit deren Hilfe alle Schritte des erfindungsgemäßen Verfahrens durchführbar sind, wenn das Computerprogramm auf einer programmierbaren Einrichtung, insbesondere der Callcentereinrichtung oder als eines Teils der Callcentereinrichtung ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln zur Herstellung einer zeitlich nachfolgenden Sprachverbindung eines Nutzers einer Callcentereinrichtung mit der Callcentereinrichtung, nachdem eine zeitlich vorhergehende Sprachverbindung des Nutzers mit der Callcentereinrichtung hergestellt wurde, wobei die Programmcodemittel dazu geeignet sind, dass alle Schritte des erfindungsgemäßen Verfahrens durchführbar sind, wenn das Computerprogramm auf einer programmierbaren Einrichtung, insbesondere der Callcentereinrichtung oder als eines Teils der Callcentereinrichtung ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt in schematischer Darstellung gemäß einer Ausführungsform der Erfindung einen Nutzer, der eine Callcentereinrichtung kontaktiert,
- **Figur 2**: zeigt ein schematisches Kommunikationsdiagramm gemäß einer Ausführungsform der Erfindung

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

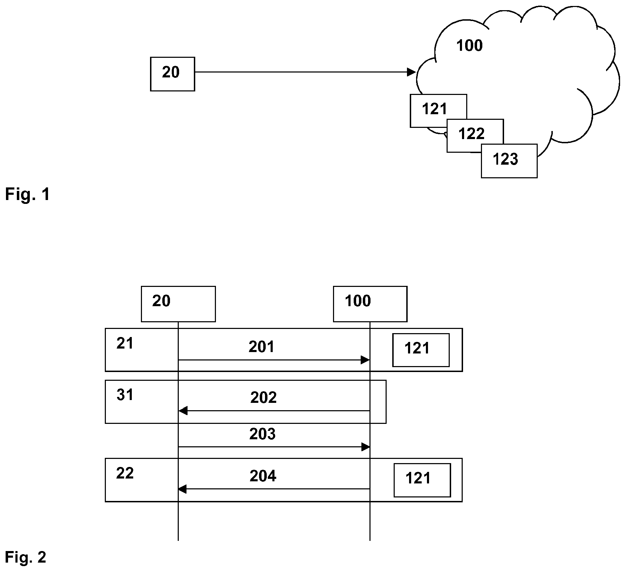

In Figur 1 ist in schematischer Darstellung gemäß einer Ausführungsform der Erfindung ein Nutzer 20, der eine Callcentereinrichtung 100 kontaktiert, gezeigt. Insbesondere sind ein Nutzer 20 einer Callcentereinrichtung 100, eine Callcentereinrichtung 100, sowie eine Mehrzahl von Sprachverbindungen durchführenden Personen 121, 122, 123, die der Callcentereinrichtung 100 zugeordnet sind, dargestellt. Der Pfeil symbolisiert dabei die Kommunikation zwischen dem Nutzer und der Callcentereinrichtung 100, bzw. zwischen dem Nutzer 20 und mindestens einer Person der Mehrzahl von Sprachverbindungen durchführenden Personen 121, 122, 123.

In Figur 2 ist ein schematisches Kommunikationsdiagramm gemäß einer Ausführungsform der Erfindung dargestellt. In einem ersten Schritt wird eine zeitlich vorhergehende Sprachverbindung 21 zwischen einem Nutzer 20 und einer bestimmten Person 121 aus einer Mehrzahl von Sprachverbindungen durchführenden Personen 121, 122, 123, die der Callcentereinrichtung 100 zugeordnet sind, aufgebaut. Dazu wird in einem ersten Prozessschritt 201 die Herstellung einer Sprachverbindung zwischen dem Nutzer 20 und der Callcentereinrichtung 100 durch den Nutzer 20 angestoßen. Nach dem Aufbau der zeitlich vorhergehenden Sprachverbindung 21 findet dann ein Gespräch zwischen dem Nutzer und der bestimmten Person 121 statt, wobei das Gespräch ein bestimmtes Anliegen des Nutzers 20 betrifft (beispielsweise eine technische Frage zu einem Produkt oder einer Dienstleistung, ein Problem mit einem Produkt oder einer Dienstleistung, eine erwünschte Auskunft bezüglich eines Produkts oder einer Dienstleistung, etc.). Im Folgenden wird die zeitlich vorhergehende Sprachverbindung 21 zwischen dem Nutzer 20 und der bestimmten Person 121 beendet. Danach wird in einem zweiten Prozessschritt 202 eine textorientierte Nachricht 31, beispielsweise eine SMS-Nachricht (short message service-Nachricht), eine MME-Nachricht (multimedia message-Nachricht), eine E-Mail-Nachricht, eine im Rahmen eines sozialen Netzwerks übertragene Nachricht (beispielswiese bereitgestellt mittels eine Applikation auf einem Mobiltelefon, einem Tablet etc.) oder eine über einen Messaging-Dienst übertragene Nachricht, von der Callcentereinrichtung 100 zum Nutzer 20 übertragen. Die textorientierte Nachricht 31 weist den Nutzer 20 auf die Möglichkeit zur Herstellung einer auf die zeitlich vorhergehende Sprachverbindung 21 Bezug nehmenden er in einem zeitlich nachfolgenden Gespräch mit der bestimmten Person, die an der Durchführung des zeitlich vorhergehenden Gespräch beteiligt war, verbunden werden möchte, zeitlich nachfolgenden Sprachverbindung 22 hin. Danach wird gemäß einer Ausführungsform der Erfindung in einem dritten Prozessschritt 203 eine nachfolgende Sprachverbindung 22 durch den Nutzer 20 bei der Callcentereinrichtung 100 angefragt. Diese Anfrage wird beispielsweise durch den Aufbau einer Sprachverbindung durch den Nutzer 20 initiiert. Gemäß einer nicht-erfindungsgemäßen Form passiert diese Anfrage mittels einer weiteren textorientierten Nachricht, die vom Nutzer 20 zu der Callcentereinrichtung 100 gesendet wird. Diese weitere textorientierte Nachricht ist dabei, z.B. eine SMS-Nachricht (short message service-Nachricht), eine MME-Nachricht (multimedia message-Nachricht), eine E-Mail-Nachricht, eine im Rahmen eines sozialen Netzwerks übertragene Nachricht (beispielswiese bereitgestellt mittels eine Applikation auf einem Mobiltelefon, einem Tablet etc.) oder eine über einen Messaging-Dienst übertragene Nachricht. Bei dieser Anfrage teilt der Nutzer 20 dem Callcenter beispielsweise mit, dass er bei einer zeitlich nachfolgenden Sprachverbindung 22 wieder mit der bestimmten Person 121 verbunden werden möchte. Des Weiteren gibt der Nutzer an, ob er eine bestimmte Präferenz bezüglich eines Zeitintervalls hat in dem die zeitlich nachfolgende Sprachverbindung 22 hergestellt werden soll und/oder eine bestimmte Rufnummer angeben oder übermitteln, zu der die zeitlich nachfolgende Sprachverbindung 22 aufgebaut werden soll. Im Folgenden wird dann gemäß einer Ausführungsform der Erfindung in einem vierten Prozessschritt 204 die zeitlich nachfolgende Sprachverbindung 22 durch die Callcentereinrichtung 100, bzw. - sofern durch den Nutzer 20 gewünscht - durch die bestimmte Person 121 initiiert, sodass ein weiteres Gespräch (beispielsweise bezüglich eines artverwandten oder identischen Sachverhalts wie das Gespräch, das nach dem Aufbau der zeitlich vorhergehenden Sprachverbindung stattgefunden hat) stattfindet.

## Patentansprüche

1. Verfahren zur Herstellung einer zeitlich nachfolgenden Sprachverbindung (22) eines Nutzers (20) einer Callcentereinrichtung (100) mit der Callcentereinrichtung (100), nachdem eine zeitlich vorhergehende Sprachverbindung (21) des Nutzers (20) mit der Callcentereinrichtung (100) hergestellt wurde und beendet ist, wobei die zeitlich nachfolgende Sprachverbindung (22) auf die zeitlich vorhergehende Sprachverbindung (21) Bezug nimmt,
wobei das Verfahren die nachfolgenden Schritte aufweist:
-- in einem ersten Schritt wird die zeitlich vorhergehende Sprachverbindung (21) zwischen dem Nutzer (20) und der Callcentereinrichtung (100) hergestellt,
-- in einem zweiten, auf den ersten Schritt nachfolgenden Schritt wird die zeitlich vorhergehende Sprachverbindung (21) beendet,
-- in einem dritten, auf den zweiten Schritt nachfolgenden Schritt wird eine textorientierte Nachricht (31) zu dem Nutzer (20) übertragen, wobei die textorientierte Nachricht (31) auf die Möglichkeit zur Herstellung der auf die zeitlich vorhergehende Sprachverbindung (21) Bezug nehmende zeitlich nachfolgende Sprachverbindung (22) hinweist,
-- in einem vierten, auf den dritten Schritt nachfolgenden Schritt wird die zeitlich nachfolgende Sprachverbindung (22) hergestellt,
-- in einem fünften, auf den dritten Schritt nachfolgenden und dem vierten Schritt vorangehenden Schritt wird die Herstellung der zeitlich nachfolgenden Sprachverbindung (22) ausgelöst oder zumindest angefragt, wobei im fünften Schritt eine Sprachverbindung des Nutzers (20) zur Callcentereinrichtung (100) aufgebaut und beendet wird und im nachfolgenden vierten Schritt die zeitlich nachfolgende Sprachverbindung (22) durch einen Rückruf der Callcentereinrichtung (100) zu dem Nutzer (20) hergestellt wird, wobei im fünften Schritt eine Zeitvorgabe des Nutzers (20) für die Herstellung der zeitlich nachfolgenden Sprachverbindung (22) an die Callcentereinrichtung (100) übertragen wird, wobei die Zeitvorgabe eine Information umfasst, dass der Nutzer (20) für die Herstellung der zeitlich nachfolgenden Sprachverbindung (22) in einem oder mehreren zukünftigen Zeitfenstern ansprechbar ist.

2. Verfahren nach Anspruch 1, **dadurch gekennzeichnet, dass** der Callcentereinrichtung (100) eine Mehrzahl von Sprachverbindungen durchführenden Personen (121, 122, 123) zugeordnet sind und sich die Bezugnahme der zeitlich nachfolgenden Sprachverbindung auf die zeitlich vorhergehende Sprachverbindung auf die die Sprachverbindungen durchführenden Personen (121, 122, 123) der Callcentereinrichtung (100) bezieht,
-- wobei entweder eine bestimmte Person (121) der Mehrzahl von Sprachverbindungen durchführenden Personen (121, 122, 123) sowohl die zeitlich vorhergehende Sprachverbindung (21) mit dem Nutzer (20) als auch die zeitlich nachfolgende Sprachverbindung (22) mit dem Nutzer (20) durchführt
-- oder wobei die bestimmte Person (121) der Mehrzahl von Sprachverbindungen durchführenden Personen (121, 122, 123) die zeitlich vorhergehende Sprachverbindung (21) mit dem Nutzer (20) durchführt und - im Falle einer Nichterreichbarkeit der bestimmten Person (121) - eine weitere Person (122) die zeitlich nachfolgende Sprachverbindung (22) mit dem Nutzer (20) durchführt, wobei die weitere Person (122) eine Vertretung der bestimmten Person (121) ist.

3. Verfahren nach einem der vorhergehenden Ansprüche, **dadurch gekennzeichnet, dass** im fünften Schritt ein Zeitvorschlag der Callcentereinrichtung (100) für die Herstellung der zeitlich nachfolgenden Sprachverbindung (22) an den Nutzer (20) übertragen wird, wobei der Zeitvorschlag wenigstens eine der nachfolgenden Informationen umfasst:
-- eine Information hinsichtlich der Verfügbarkeit der bestimmten Person (121),
-- eine Information, dass die bestimmte Person (121) für die Herstellung der zeitlich nachfolgenden Sprachverbindung (22) in einem oder mehreren weiteren zukünftigen Zeitfenstern ansprechbar ist,
-- eine Information, dass die weitere Person (122) für die Herstellung der zeitlich nachfolgenden Sprachverbindung (22) in einem oder mehreren weiteren zukünftigen Zeitfenstern ansprechbar ist.

4. Verfahren nach einem der vorhergehenden Ansprüche, **dadurch gekennzeichnet, dass** die im dritten Schritt an den Nutzer (20) übertragene textorientierte Nachricht (31) wenigstens einer der nachfolgenden Nachrichten entspricht:
-- eine SMS-Nachricht, short message service-Nachricht,
-- eine MME-Nachricht, multimedia message-Nachricht,
-- eine E-Mail-Nachricht,
-- eine im Rahmen eines sozialen Netzwerks übertragene Nachricht,
-- eine über einen Messaging-Dienst übertragene Nachricht.

5. Verfahren nach einem der vorhergehenden Ansprüche, **dadurch gekennzeichnet, dass** im fünften Schritt eine für die Herstellung der zeitlich nachfolgenden Sprachverbindung (22) zu benutzende Rufnummer oder Identifikationsinformation des Nutzer (20) zur Callcentereinrichtung (100) übertragen wird.

6. Verfahren nach einem der vorhergehenden Ansprüche, **dadurch gekennzeichnet, dass** die Herstellung der zeitlich nachfolgenden Sprachverbindung (22) im vierten Schritt lediglich dann erfolgt, wenn der fünfte Schritt innerhalb eines vorgegebenen Zeitintervalls nach der zeitlich vorhergehenden Sprachverbindung (21) erfolgt.

7. Callcentereinrichtung (100) zur Herstellung einer zeitlich nachfolgenden Sprachverbindung (22) eines Nutzers (20) der Callcentereinrichtung (100) mit der Callcentereinrichtung (100), nachdem eine zeitlich vorhergehende Sprachverbindung (21) des Nutzers (20) mit der Callcentereinrichtung (100) hergestellt wurde und beendet ist, wobei die Callcentereinrichtung (100) derart konfiguriert ist, dass die zeitlich nachfolgende Sprachverbindung (22) auf die zeitlich vorhergehende Sprachverbindung (21) Bezug nimmt, und ferner derart konfiguriert ist, dass
-- die zeitlich vorhergehende Sprachverbindung (21) zwischen dem Nutzer (20) und der Callcentereinrichtung (100) hergestellt und beendet wird,
-- eine textorientierte Nachricht (31) zu dem Nutzer (20) übertragen wird, wobei die textorientierte Nachricht (31) auf die Möglichkeit zur Herstellung der auf die zeitlich vorhergehende Sprachverbindung (21) Bezug nehmende zeitlich nachfolgende Sprachverbindung (22) hinweist,
-- nach einem, auf die Übertragung der textorientierten Nachricht folgenden, Aufbau und anschließender Beendigung einer Sprachverbindung des Nutzers (20) zur Callcentereinrichtung (100) die zeitlich nachfolgende Sprachverbindung (22) durch einen Rückruf der Callcentereinrichtung (100) zu dem Nutzer (20) hergestellt wird, wobei die zeitlich nachfolgende Sprachverbindung (22) in Abhängigkeit von einer Zeitvorgabe erfolgt, die über die, nach der Übertragung der textorientierten Nachricht aufgebaute und beendete Sprachverbindung vom Nutzer (20) and die Callcentereinrichtung (100) übertragen wurde, wobei die Zeitvorgabe eine Information umfasst, dass der Nutzer (20) für die Herstellung der zeitlich nachfolgenden Sprachverbindung (22) in einem oder mehreren zukünftigen Zeitfenstern ansprechbar ist.

8. Callcentereinrichtung (100) nach Anspruch 7, **dadurch gekennzeichnet, dass** der Callcentereinrichtung (100) eine Mehrzahl von Sprachverbindungen durchführenden Personen (121, 122, 123) zugeordnet sind und sich die Bezugnahme der zeitlich nachfolgenden Sprachverbindung auf die zeitlich vorhergehende Sprachverbindung auf die die Sprachverbindungen durchführenden Personen (121, 122, 123) der Callcentereinrichtung (100) bezieht,
-- wobei entweder eine bestimmte Person (121) der Mehrzahl von Sprachverbindungen durchführenden Personen (121, 122, 123) sowohl die zeitlich vorhergehende Sprachverbindung (21) mit dem Nutzer (20) als auch die zeitlich nachfolgende Sprachverbindung (22) mit dem Nutzer (20) durchführt
-- oder wobei die bestimmte Person (121) der Mehrzahl von Sprachverbindungen durchführenden Personen (121, 122, 123) die zeitlich vorhergehende Sprachverbindung (21) mit dem Nutzer (20) durchführt und - im Falle einer Nichterreichbarkeit der bestimmten Person (121) - eine weitere Person (122) die zeitlich nachfolgende Sprachverbindung (22) mit dem Nutzer (20) durchführt, wobei die weitere Person (122) eine Vertretung der bestimmten Person (121) ist.

9. Computerprogramm mit Programmcodemitteln, mit deren Hilfe die Schritte eines Verfahrens nach einem der Ansprüche 1 bis 6 durchführbar sind, wenn das Computerprogramm auf einer programmierbaren Einrichtung, insbesondere der Callcentereinrichtung (100) oder als eines Teils der Callcentereinrichtung (100) ausgeführt wird.

10. Computerprogrammprodukt mit einem computerlesbaren Medium und einem auf dem computerlesbaren Medium gespeicherten Computerprogramm mit Programmcodemitteln zur Herstellung einer zeitlich nachfolgenden Sprachverbindung (22) eines Nutzers (20) einer Callcentereinrichtung (100) mit der Callcentereinrichtung (100), nachdem eine zeitlich vorhergehende Sprachverbindung (21) des Nutzers (20) mit der Callcentereinrichtung (100) hergestellt wurde, wobei die Programmcodemittel dazu geeignet sind, dass die Schritte eines Verfahrens nach einem der Ansprüche 1 bis 6 durchführbar sind, wenn das Computerprogramm auf einer programmierbaren Einrichtung, insbesondere der Callcentereinrichtung (100) oder als eines Teils der Callcentereinrichtung (100) ausgeführt wird.

## Claims

1. Method for establishing a temporally subsequent voice connection (22) of a user (20) of a call centre facility (100) to the call centre facility (100) after a temporally preceding voice connection (21) of the user (20) to the call centre facility (100) has been established and has ended, wherein the temporally subsequent voice connection (22) relates to the temporally preceding voice connection (21),
wherein the method comprises the following steps:
- in a first step, the temporally preceding voice connection (21) between the user (20) and the call centre facility (100) is established,
- in a second step following the first step, the temporally preceding voice connection (21) is ended,
- in a third step following the second step, a text-oriented message (31) is transmitted to the user (20), wherein the text-oriented message (31) indicates the possibility of establishing the temporally subsequent voice connection (22) which relates to the temporally preceding voice connection (21),
- in a fourth step following the third step, the temporally subsequent voice connection (22) is established,
- in a fifth step following the third step and preceding the fourth step, the establishment of the temporally subsequent voice connection (22) is initiated or at least requested, wherein in the fifth step, a voice connection of the user (20) to the call centre facility (100) is set up and ended and, in the following fourth step, the temporally subsequent voice connection (22) is established by a call-back from the call centre facility (100) to the user (20), wherein in the fifth step a time specification from the user (20) for establishing the temporally subsequent voice connection (22) is transmitted to the call centre facility (100), wherein the time specification comprises information that the user (20) is available in one or more future time windows for the establishment of the temporally subsequent voice connection (22).

2. Method as claimed in claim 1, **characterised in that** a plurality of individuals (121, 122, 123) implementing voice connections are associated with the call centre facility (100), and the reference of the temporally subsequent voice connection to the temporally preceding voice connection relates to the individuals (121, 122, 123) of the call centre facility (100) implementing the voice connections,
- wherein either one specific individual (121) of the plurality of individuals (121, 122, 123) implementing voice connections implements the temporally preceding voice connection (21) to the user (20) and also the temporally subsequent voice connection (22) to the user (20),
- or wherein the specific individual (121) of the plurality of individuals (121, 122, 123) implementing voice connections implements the temporally preceding voice connection (21) to the user (20) and, in the event that the specific individual (121) cannot be reached, a further individual (122) implements the temporally subsequent voice connection (22) to the user (20), wherein the further individual (122) is a substitute for specific individual (121).

3. Method as claimed in any one of the preceding claims, **characterised in that** in the fifth step, a time proposal by the call centre facility (100) for establishing the temporally subsequent voice connection (22) is transmitted to the user (20), the time proposal comprising at least one of the following items of information:
- information regarding the availability of the specific individual (121),
- information indicating that the specific individual (121) is available for establishing the temporally subsequent voice connection (22) in one or more further future time windows,
- information indicating that the further individual (122) is available for establishing the temporally subsequent voice connection (22) in one or more further future time windows.

4. Method as claimed in any one of the preceding claims, **characterised in that** the text-oriented message (31) transmitted to the user (20) in the third step corresponds to at least one of the following messages:
- a short message service message, SMS message,
- a multimedia message, MME message,
- an e-mail message,
- a message transmitted within the context of a social network,
- a message transmitted via a messaging service.

5. Method as claimed in any one of the preceding claims, **characterised in that** in the fifth step, a telephone number or identification information of the user (20) which is to be used for establishing the temporally subsequent voice connection (22) is transmitted to the call centre facility (100).

6. Method as claimed in any one of the preceding claims, **characterised in that** the temporally subsequent voice connection (22) is established in the fourth step only when the fifth step occurs within a predetermined time interval after the temporally preceding voice connection (21).

7. Call centre facility (100) for establishing a temporally subsequent voice connection (22) of a user (20) of the call centre facility (100) to the call centre facility (100) after a temporally preceding voice connection (21) of the user (20) to the call centre facility (100) has been established and has ended, wherein the call centre facility (100) is configured such that the temporally subsequent voice connection (22) relates to the temporally preceding voice connection (21), and is further configured such that
- the temporally preceding voice connection (21) between the user (20) and the call centre facility (100) is established and ended,
- a text-oriented message (31) is transmitted to the user (20), wherein the text-oriented message (31) indicates the possibility of establishing the temporally subsequent voice connection (22) which relates to the temporally preceding voice connection (21),
- after setting up, following the transmission of the text-oriented message, and subsequent ending of a voice connection of the user (20) to the call centre facility (100), the temporally subsequent voice connection (22) is established by a call-back from the call centre facility (100) to the user (20), wherein the temporally subsequent voice connection (22) occurs in dependence upon a time specification which has been transmitted from the user (20) to the call centre facility (100) via the voice connection set up following the transmission of the text-oriented message and ended, wherein the time specification comprises information that the user (20) is available in one or more future time windows for the establishment of the temporally subsequent voice connection (22).

8. Call centre facility (100) as claimed in claim 7, **characterised in that** a plurality of individuals (121, 122, 123) implementing voice connections are associated with the call centre facility (100), and the reference of the temporally subsequent voice connection to the temporally preceding voice connection relates to the individuals (121, 122, 123) of the call centre facility (100) implementing the voice connections,
- wherein either one specific individual (121) of the plurality of individuals (121, 122, 123) implementing voice connections implements the temporally preceding voice connection (21) to the user (20) and also the temporally subsequent voice connection (22) to the user (20),
- or wherein the specific individual (121) of the plurality of individuals (121, 122, 123) implementing voice connections implements the temporally preceding voice connection (21) to the user (20) and, in the event that the specific individual (121) cannot be reached, a further individual (122) implements the temporally subsequent voice connection (22) to the user (20), wherein the further individual (122) is a substitute for the specific individual (121).

9. Computer program having program code means which can be used to execute the steps of a method as claimed in any one of claims 1 to 6 when the computer program is run on a programmable device, in particular the call centre facility (100) or as part of the call centre facility (100).

10. Computer program product having a computer a computer-readable medium and a computer program stored on the computer-readable medium having program code means for establishing a temporally subsequent voice connection (22) of a user (20) of a call centre facility (100) to the call centre facility (100) after a temporally preceding voice connection (21) of the user (20) to the call centre facility (100) has been established, wherein the program code means are suitable to execute the steps of a method as claimed in any one of claims 1 to 6 when the computer program is run on a programmable device, in particular the call centre facility (100) or as part of the call centre facility (100).

## Revendications

1. Procédé établissant une liaison vocale chronologiquement postérieure (22) d'un utilisateur (20) d'un dispositif de centre d'appel (100) avec le dispositif de centre d'appel (100), après qu'une liaison vocale chronologiquement antérieure (21) de l'utilisateur (20) d'un dispositif de centre d'appel (100) a été établie et est terminée, dans lequel la liaison vocale chronologiquement postérieure (22) fait référence à la liaison vocale chronologiquement antérieure (21),
dans lequel le procédé comporte les étapes suivantes :
- dans une première étape, la liaison vocale chronologiquement antérieure (21) entre l'utilisateur (20) et le dispositif de centre d'appel (100) est établie,
- dans une deuxième étape suivant la première étape, la liaison vocale chronologiquement antérieure (21) est terminée,
- dans une troisième étape suivant la deuxième étape, un message texte (31) est transmis à l'utilisateur (20), dans lequel le message texte (31) informe sur la possibilité d'établir la liaison vocale chronologiquement postérieure (22) faisant référence à la liaison vocale chronologiquement antérieure (21),
- dans une quatrième étape suivant la troisième étape, la liaison vocale chronologiquement postérieure (22) est établie,
- dans une cinquième étape suivant la troisième étape et précédent la quatrième étape, l'établissement de la liaison vocale chronologiquement postérieure (22) est déclenché ou au moins demandé, dans lequel dans la cinquième étape une liaison vocale de l'utilisateur (20) au dispositif de centre d'appel (100) est créée et terminée et dans la quatrième étape suivant la liaison vocale chronologiquement postérieure (22) est établie par un rappel de l'utilisateur (20) par le dispositif de centre d'appel (100), dans lequel dans la cinquième étape un minutage de l'utilisateur (20) pour l'établissement de la liaison vocale chronologiquement postérieure (22) est transmis au dispositif de centre d'appel (100), dans lequel le minutage comprend une information que l'utilisateur (20) est adressable pour l'établissement de la liaison vocale chronologiquement postérieure (22) dans un ou plusieurs créneaux horaires futurs.

2. Procédé selon la revendication 1, **caractérisé en ce qu'**une pluralité de personnes (121, 122, 123) réalisant des liaisons vocales sont associées au dispositif de centre d'appel (100) et la référence de la liaison vocale chronologiquement postérieure se réfère à la liaison vocale chronologiquement antérieure avec les personnes (121, 122, 123) réalisant les liaisons vocales du centre d'appel (100),
- dans lequel ou bien une personne déterminée (121) de la pluralité de personnes (121, 122, 123) réalisant des liaisons vocales réalise aussi bien la liaison vocale chronologiquement antérieure (21) avec l'utilisateur (20) que la liaison vocale chronologiquement postérieure (22) avec l'utilisateur (20)
- ou dans lequel la personne déterminée (121) de la pluralité de personnes (121, 122, 123) réalisant des liaisons vocales réalise la liaison vocale chronologiquement antérieure (21) avec l'utilisateur (20) et, en cas d'inaccessibilité de la personne déterminée (121), une personne ultérieure (122) réalise la liaison vocale chronologiquement postérieure (22) avec l'utilisateur (20), dans lequel la personne ultérieure (122) est suppléante de la personne déterminée (121) .

3. Procédé selon l'une des revendications précédentes, **caractérisé en ce que** dans la cinquième étape un minutage du dispositif de centre d'appel (100) pour l'établissement de la liaison vocale chronologiquement postérieure (22) est transmis à l'utilisateur (20), dans lequel le minutage comprend au moins une des informations suivantes :
- une information concernant la disponibilité de la personne déterminée (121),
- une information que la personne déterminée (121) est adressable pour l'établissement de la liaison vocale chronologiquement postérieure (22) dans un ou plusieurs créneaux horaires futurs ultérieurs,
- une information que la personne ultérieure (122) est adressable pour l'établissement de la liaison vocale chronologiquement postérieure (22) dans un ou plusieurs créneaux horaires futurs ultérieurs.

4. Procédé selon l'une des revendications précédentes, **caractérisé en ce que** le message texte (31) transmis à l'utilisateur (20) dans la troisième étape correspond à :
- un message SMS ou short message service,
- un message MME ou multimedia message,
- un message par courriel,
- un message transmis dans le cadre d'un réseau social,
- un message transmis par le biais d'un service de messagerie.

5. Procédé selon l'une des revendications précédentes, **caractérisé en ce que** dans la cinquième étape un numéro d'appel ou une information d'identification de l'utilisateur (20) à utiliser pour l'établissement de la liaison vocale chronologiquement postérieure (22) est transmise au dispositif de centre d'appel (100).

6. Procédé selon l'une des revendications précédentes, **caractérisé en ce que** l'établissement de la liaison vocale chronologiquement postérieure (22) s'effectue dans la quatrième étape uniquement si la cinquième étape s'effectue dans un intervalle de temps prédéfini après la liaison vocale chronologiquement antérieure (21).

7. Dispositif de centre d'appel (100) établissant une liaison vocale chronologiquement postérieure (22) d'un utilisateur (20) du dispositif de centre d'appel (100) avec le dispositif de centre d'appel (100), après qu'une liaison vocale chronologiquement antérieure (21) de l'utilisateur (20) d'un dispositif de centre d'appel (100) a été établie et est terminée, dans lequel le dispositif de centre d'appel (100) est configuré de sorte que la liaison vocale chronologiquement postérieure (22) fait référence à la liaison vocale chronologiquement antérieure (21), et configuré en outre de sorte que
- la liaison vocale chronologiquement antérieure (21) entre l'utilisateur (20) et le dispositif de centre d'appel (100) est établie et terminée,
- un message texte (31) est transmis à l'utilisateur (20), dans lequel le message texte (31) informe sur la possibilité d'établir la liaison vocale chronologiquement postérieure (22) faisant référence à la liaison vocale chronologiquement antérieure (21),
- après une création et terminaison subséquente d'une liaison vocale de l'utilisateur (20) au dispositif de centre d'appel (100) à la suite de la transmission du message texte, la liaison vocale chronologiquement postérieure (22) est établie par un rappel de l'utilisateur (20) par le dispositif de centre d'appel (100), dans lequel la liaison vocale chronologiquement postérieure (22) s'effectue en fonction d'un minutage, lequel est transmis par le biais de la liaison vocale de l'utilisateur (20) et du dispositif de centre d'appel (100) crée après transmission du message texte et terminée, dans lequel le minutage comprend une information que l'utilisateur (20) est adressable pour l'établissement de la liaison vocale chronologiquement postérieure (22) dans un ou plusieurs créneaux horaires futurs.

8. Dispositif de centre d'appel (100) selon la revendication 7, **caractérisé en ce qu'**une pluralité de personnes (121, 122, 123) réalisant des liaisons vocales sont associées au dispositif de centre d'appel (100) et la référence de la liaison vocale chronologiquement postérieure se réfère à la liaison vocale chronologiquement antérieure avec les personnes (121, 122, 123) réalisant les liaisons vocales du centre d'appel (100),
- dans lequel ou bien une personne déterminée (121) de la pluralité de personnes (121, 122, 123) réalisant des liaisons vocales réalise aussi bien la liaison vocale chronologiquement antérieure (21) avec l'utilisateur (20) que la liaison vocale chronologiquement postérieure (22) avec l'utilisateur (20)
- ou dans lequel la personne déterminée (121) de la pluralité de personnes (121, 122, 123) réalisant des liaisons vocales réalise la liaison vocale chronologiquement antérieure (21) avec l'utilisateur (20) et, en cas d'inaccessibilité de la personne déterminée (121), une personne ultérieure (122) réalise la liaison vocale chronologiquement postérieure (22) avec l'utilisateur (20), dans lequel la personne ultérieure (122) est suppléante de la personne déterminée (121) .

9. Programme informatique doté de moyens de code de programme, à l'aide desquels les étapes d'un procédé d'après l'une des revendications 1 à 6 peuvent être mises en œuvre, lorsque le programme informatique est exécuté sur un dispositif programmable, en particulier le dispositif de centre d'appel (100) ou comme une partie du dispositif de centre d'appel (100).

10. Produit-programme informatique doté d'un support lisible par ordinateur et d'un programme informatique enregistré sur le support lisible par ordinateur doté de moyens de code de programme établissant une liaison vocale chronologiquement postérieure (22) d'un utilisateur (20) d'un dispositif de centre d'appel (100) avec le dispositif de centre d'appel (100), après qu'une liaison vocale chronologiquement antérieure (21) de l'utilisateur (20) d'un dispositif de centre d'appel (100) a été établie, dans lequel les moyens de code de programme sont adaptés de telle sorte que toutes les étapes d'un procédé d'après l'une des revendications 1 à 6 peuvent être mises en œuvre, lorsque le programme informatique est exécuté sur un dispositif programmable, en particulier le dispositif de centre d'appel (100) ou comme une partie du dispositif de centre d'appel (100).
